# EUROPÄISCHE PATENTSCHRIFT

(11) **EP 1 213 499 B1**
(45) Veröffentlichungstag und Bekanntmachung des Hinweises auf die Patenterteilung: **25.05.2005**
(21) Anmeldenummer: 01125288.9
(22) Anmeldetag: 25.10.2001
(51) Int. Cl.: F16C 29/06

(54) **Linearwälzlager**
Linear rolling bearing
Palier à roulement linéaire

(30) Priorität: 07.12.2000 DE 10060719
(43) Veröffentlichungstag der Anmeldung: 12.06.2002
(73) Patentinhaber: INA-Schaeffler KG, 91074 Herzogenaurach (DE)
(72) Erfinder: Wiehl, Hermann, 91074 Herzogenaurach (DE)

(56) Entgegenhaltungen:
- EP-A- 0 558 761
- EP-A- 0 692 646
- DE-A- 3 705 704
- US-A- 4 304 443
- US-A- 4 576 420
- US-A- 4 582 371
- US-A- 5 169 239

## Beschreibung

### Gebiet der Erfindung

Die Erfindung betrifft ein Linearwälzlager mit einer Führungsschiene und einem Tragkörper, der an der Führungsschiene über tragende Wälzkörper mehrerer endloser Wälzkörperumläufe längsverschieblich abgestützt ist, wobei er einen Grundkörper aus einem Formwerkstoff, z. B. einem Kunststoff, einem Sinterwerkstoff oder einer Druckgusslegierung, sowie Blechteile enthält, welche an dem Formwerkstoff anliegen und Laufbahnen für die tragenden Wälzkörper aufweisen.

### Hintergrund der Erfindung

Ein solches Linearwälzlager ist aus der Druckschrift EP 0 558 761 B1 bekannt. Es weist einen Tragkörper auf, bei welchem Lastkugelrillen an einer dünnen Kugelplatte angeordnet sind. Diese ist mit einer zusätzlichen Befestigungsplatte und einem Formwerkstoff einstückig ausgebildet, was durch eine Einspritzformung erfolgen kann. Diese Ausführung mit einer Kugelplatte und einer Befestigungsplatte ist nicht nur konstruktiv aufwendig, sie hat auch den Nachteil, dass die Platten für die anschließende Einspritzformung des Tragkörpers genau zusammengesetzt in die Spritzform eingelegt werden müssen. Dadurch wird der Einspritzvorgang aufwendig und teuer, während das Einspritzformen eines Kunststoffteils allein, also ohne auf ein damit zu verbindendes Blechteil Rücksicht nehmen zu müssen, einfacher durchzuführen ist.

Aus der Druckschrift US-A-4 304 443 ist ein Linearwälzlager der eingangs genannten Art bekannt, dessen Blechteile zusätzlich zu den Laufbahnen für die tragenden Wälzkörper auch Laufbahnen für die rücklaufenden Wälzkörper sowie zwei diese Laufbahnen miteinander verbindende Umlenkbahnen aufweist, so dass jedes Blechteil eine geschlossene Umlaufbahn bildet.

### Zusammenfassung der Erfindung

Der Erfindung liegt die Aufgabe zugrunde, die den bekannten Lagern anhaftenden Nachteile zu beseitigen und eine Linearführung anzugeben, die bei nur geringen Herstellungskosten einen kleinen Bauraum und ein geringes Gewicht aufweist.

Diese Aufgabe wird erfindungsgemäß dadurch gelöst, dass jedes Blechteil eine geschlossene Umlaufbahn bildet und innerhalb der geschlossenen Umlaufbahn eine ausgestanzte Öffnung aufweist, mit welcher es über einen Vorsprung des Grundkörpers gesteckt ist, wonach es an dem Grundkörper angelegt und befestigt ist. Auf diese Weise ist es möglich, die Blechteile, die spanlos hergestellt werden können, und den Grundkörper des Tragkörpers getrennt voneinander herzustellen. Infolge der ausgestanzten Öffnung ergibt sich ein geringeres Gewicht und damit eine Verbesserung der Funktion des Linearwälzlagers. Die Lagerteile lassen sich leicht zusammenfügen, ermöglichen also eine einfache und schnelle, werkzeugfreie Montage. Insbesondere ist mit der Erfindung blechteilseitig jeweils eine stabile Laufbahn gegeben, wobei eine platzsparende Anordnung des mit der Ausstanzung versehenen Blechteils an dem Formwerkstoff des Tragkörpers erreicht wird, der aus dem Raum der Öffnung ausgestanzte Werkstoff des Blechteils kann dann zu einem die Laufbahn für die tragenden Wälzkörper bildenden Endbereich umgeformt sein. In dem Blechteil sind dann für einen endlosen Wälzkörperumlauf zusätzlich zu der Laufbahn für die tragenden Wälzkörper eine Laufbahn für rücklaufende Wälzkörper und zwei diese Laufbahnen miteinander verbindende Umlenkbahnen eingeformt.

Das Blechteil kann an dem Grundkörper mit Schrauben oder mit Nieten befestigt sein.

Die Wälzkörper können entweder Kugeln oder Rollen sein. Mit Rollen lässt sich eine Kreuzrollenführung bilden. Der Tragkörper kann im Querschnitt U-förmig ausgebildet sein und die Führungsschiene teilweise umgreifen. Es ist aber auch möglich, die Führungsschiene im Querschnitt U-förmig auszubilden, die dann den Tragkörper teilweise umgreift.

Der Tragkörper kann zwei deckungsgleiche Blechteile enthalten, die jeweils zu einer der beiden Längsseiten der Führungsschiene benachbart angeordnet sind. Wenn der kreisbogenförmige Endbereich jedes Blechteils, an dem die Laufbahn für die tragenden Wälzkörper ausgebildet ist, ein Bogenmaß bzw. einen Mittelpunktswinkel von mehr als 180° aufweist, können aus ihm beim Abnehmen des Tragkörpers von der Führungsschiene die Wälzkörper nicht herausfallen.

### Kurze Beschreibung der Zeichnung

Ausführungsbeispiele der Erfindung sind in der Zeichnung dargestellt und werden im folgenden näher beschrieben. Es zeigen:
- Figur 1: eine Unteransicht des Tragkörpers eines erfindungsgemäßen Linearwälzlagers;
- Figur 2: einen Querschnitt durch ein erfindungsgemäßes Linearwälzlager mit dem Tragkörper der Figur 1, als Kugeln ausgebildeten Wälzkörpern und einer Führungsschiene;
- Figur 3: eine Ansicht eines Blechteils des Linearwälzlagers;
- Figur 4: einen Querschnitt durch das Blechteil gemäß Linie IV-IV der Figur 3;
- Figur 5: die Befestigung des Blechteils an einem Grundkörper mit einer Schraube;
- Figur 6: die Befestigung zweier Blechteile an einem Grundkörper mit Nieten;
- Figuren 7 bis 9: Querschnitte durch weitere erfindungsgemäße Lager.

### Ausführliche Beschreibung der Zeichnung

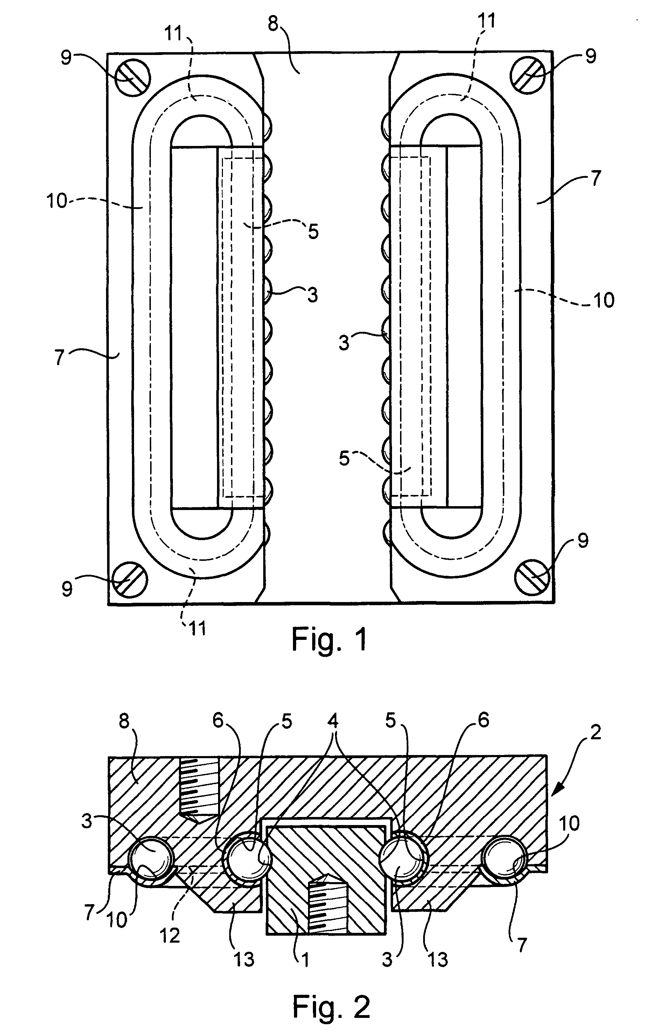

Ein in den Figuren 1 bis 5 dargestelltes erfindungsgemäßes Linearwälzlager besteht aus einer Führungsschiene 1 und einem diese teilweise umgreifenden Tragkörper 2. Dieser ist über als Kugeln ausgebildete Wälzkörper 3 an den beiden Längsseiten der Führungsschiene 1 abgestützt, wobei die Wälzkörper 3 in Laufbahnen 4 der Führungsschiene 1 und in Laufbahnen 5 des Tragkörpers 2 abrollbar angeordnet sind.

Die Laufbahnen 5 sind jeweils von der inneren Oberfläche eines im Querschnitt kreisringförmigen Endbereichs 6 eines Blechteils 7 gebildet. Der Tragkörper 2 enthält einen Grundkörper 8 aus einem Formwerkstoff, welcher die Führungsschiene 1 teilweise umgreift, und zwei den beiden Längsseiten der Führungsschiene 1 benachbarte Blechteile 7, die an dem Grundkörper 8 mit Schrauben 9 befestigt sind.

Jedes Blechteil 7 enthält außer der Laufbahn 5 für tragende Wälzkörper 3 eine Laufbahn 10 für rücklaufende Wälzkörper 3 und zwei Umlenkbahnen 11, über welche die Laufbahn 5 für die tragenden Wälzkörper 3 und die Laufbahn 10 für die rücklaufenden Wälzkörper 3 miteinander zu einem endlosen Umlauf verbunden sind. Die Laufbahn 10 für die rücklaufenden Wälzkörper 3 und die Umlenkbahnen 11 sind in dem Blechteil 7 eingeformt. Aus dem mittleren Bereich des Blechteils 7 ist der Werkstoff ausgestanzt und zu dem Endbereich 6 mit der Laufbahn 5 für die tragenden Wälzkörper 3 umgeformt. Infolge der Ausstanzung ergibt sich an dem Blechteil 7 eine Öffnung 12, mit welcher das Blechteil 7 auf einen Vorsprung 13 des Grundkörpers 8 aufgesteckt wird, wenn es an dem Grundkörper 8 angelegt und dort anschließend angeschraubt wird.

Die Wälzkörper 3 sind in dem Tragkörper 2 in zwei endlosen Umläufen angeordnet. Jeder Umlauf enthält eine Reihe tragender Wälzkörper 3, die zwischen dem Tragkörper 2 und der Führungsschiene 1 angeordnet sind, eine Reihe rücklaufender Wälzkörper 3 und zwei Reihen von Wälzkörpern 3, die an den Umlenkbahnen 11 abrollen. Für die tragenden Wälzkörper 3 ist jeweils die Laufbahn 5 und für die rücklaufenden Wälzkörper die Laufbahn 10 vorgesehen.

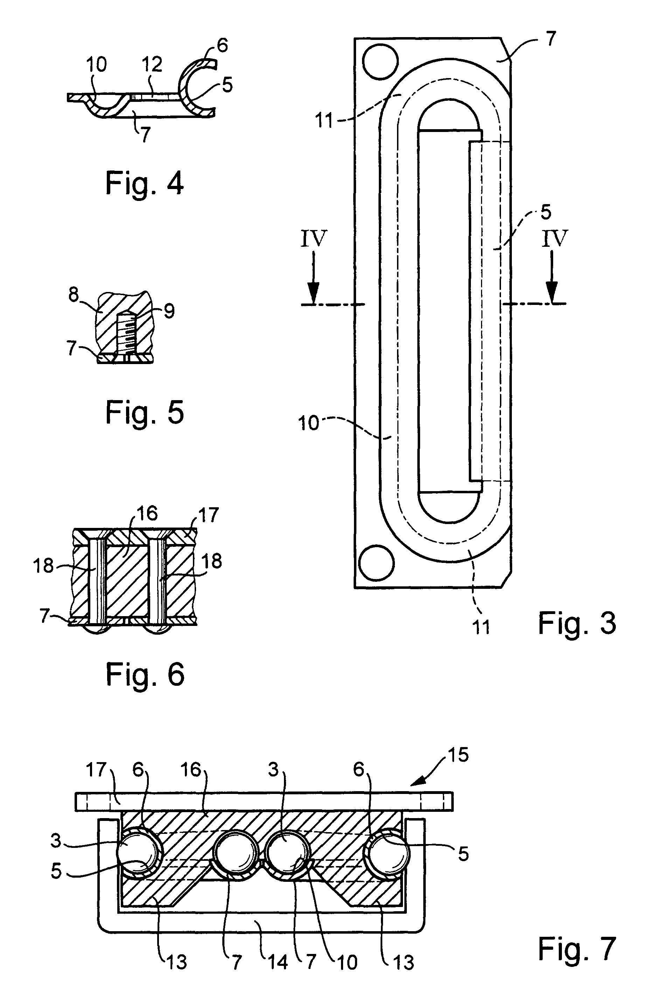

Von dieser Ausführung unterscheidet sich ein in den Figuren 6 und 7 dargestelltes erfindungsgemäßes Linearwälzlager dadurch, dass die Führungsschiene 14 im Querschnitt U-förmig ausgebildet ist. Der Tragkörper 15 ist mit seinem Grundkörper 16, dessen Vorsprüngen 13 und den dort aufgesteckten und angelegten Blechteilen 7 mit den Umläufen der Wälzkörper 3 innerhalb der Führungsschiene 14 angeordnet und längsverschieblich abgestützt. Die Endbereiche 6 mit den Laufbahnen 5 für die tragenden Wälzkörper 3 befinden sich hier an den Außenseiten des Tragkörpers 15 und sind den Innenseiten der U-Schenkel der Führungsschiene 14 benachbart. Der Grundkörper 16 ist an einer Montageplatte 17 befestigt, die sich außerhalb der Führungsschiene 14 befindet. Die Befestigung der Blechteile 7, des Grundkörpers 16 und der Montageplatte 17 aneinander ist hier mit Nieten 18 durchgeführt.

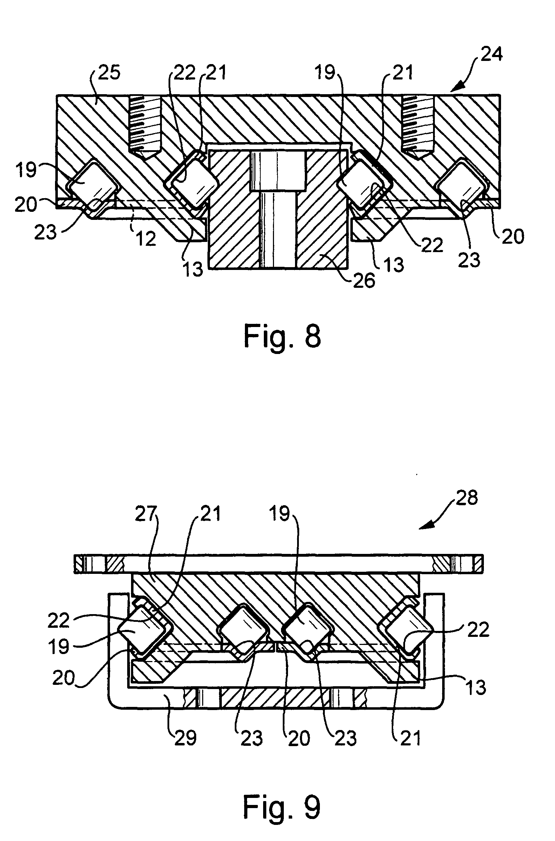

Das in Figur 8 dargestellte erfindungsgemäße Linearwälzlager entspricht dem Lager nach Figur 2. Hier sind jedoch als Wälzkörper 19 Rollen verwendet, die so angeordnet sind, dass eine Kreuzrollenführung vorliegt. Dementsprechend ist die Form der Blechteile 20 mit den Endbereichen 21, welche die Laufbahnen 22 für die tragenden Wälzkörper 19 enthalten, und mit den Laufbahnen 23 für die rücklaufenden Wälzkörper 19 abgewandelt und an die Wälzkörperform angepasst. Der Tragkörper 24 ist mit seinem Grundkörper 25 an den Außenseiten der Führungsschiene 26 über die als Rollen ausgebildeten Wälzkörper 19 längsverschieblich abgestützt.

Das in Figur 9 dargestellte erfindungsgemäße Linearlager entspricht dem Lager nach Figur 7. Hier sind jedoch ebenso wie in Figur 8 als Wälzkörper 19 Rollen in einer Kreuzrollenanordnung verwendet. In dem Grundkörper 27 des Tragkörpers 28 sind die angepassten Blechteile 20 angeordnet. Sie enthalten die Endbereiche 21, welche die Laufbahnen 22 für die tragenden Wälzkörper 19 aufweisen, und die Laufbahnen 23 für die rücklaufenden Wälzkörper 19. Der Tragkörper 28 ist mit seinem Grundkörper 27 an den Innenseiten der U-Schenkel der im Querschnitt U-förmigen Führungsschiene 29 längsverschieblich abgestützt.

### Bezugszahlen

- 1: Führungsschiene
- 2: Tragkörper
- 3: Kugel
- 4: Laufbahn
- 5: Laufbahn
- 6: Endbereich
- 7: Blechteil
- 8: Grundkörper
- 9: Schraube
- 10: Laufbahn
- 11: Umlenkbahn
- 12: Öffnung
- 13: Vorsprung
- 14: Führungsschiene
- 15: Tragkörper
- 16: Grundkörper
- 17: Montageplatte
- 18: Niet
- 19: Wälzkörper
- 20: Blechteil
- 21: Endbereich
- 22: Laufbahn
- 23: Laufbahn
- 24: Tragkörper
- 25: Grundkörper
- 26: Führungsschiene
- 27: Grundkörper
- 28: Tragkörper
- 29: Führungsschiene

## Patentansprüche

1. Linearwälzlager mit einer Führungsschiene (1, 14, 26, 29) und einem Tragkörper (2, 15, 24, 28), der an der Führungsschiene (1, 14, 26, 29) über tragende Wälzkörper (3, 19) mehrerer endloser Wälzkörperumläufe längsverschieblich abgestützt ist, wobei er einen Grundkörper (8, 16, 25, 27) aus einem Formwerkstoff, z. B. einem Kunststoff, einem Sinterwerkstoff oder einer Druckgusslegierung, sowie Blechteile (7, 20) enthält, welche an dem Formwerkstoff anliegen und Laufbahnen (5, 22) für die tragenden Wälzkörper (3, 19) aufweisen, **dadurch gekennzeichnet, dass** jedes Blechteil (7, 20) eine geschlossene Umlaufbahn bildet und innerhalb der geschlossenen Umlaufbahn eine ausgestanzte Öffnung (12) aufweist, mit welcher es über einen Vorsprung (13) des Grundkörpers (8, 16, 25, 27) gesteckt ist, wonach es an dem Grundkörper (8, 16, 25, 27) angelegt und befestigt ist.

2. Linearwälzlager nach Anspruch 1, **dadurch gekennzeichnet, dass** das Blechteil (7, 20) an dem Grundkörper (8, 16, 25, 27) mit Schrauben (9) lösbar befestigt ist.

3. Linearwälzlager nach Anspruch 1, **dadurch gekennzeichnet, dass** das Blechteil (7, 20) an dem Grundkörper (8, 16, 25, 27) mit Nieten (18) befestigt ist.

4. Linearwälzlager nach Anspruch 1, **dadurch gekennzeichnet, dass** die Wälzkörper (3) Kugeln sind und mit den Bauteilen des Wälzlagers eine Kugelführung bilden.

5. Linearwälzlager nach Anspruch 1, **dadurch gekennzeichnet, dass** die Wälzkörper (19) Rollen sind und mit den Bauteilen des Wälzlagers eine Kreuzrollenführung bilden.

6. Linearwälzlager nach Anspruch 1, **dadurch gekennzeichnet, dass** der Tragkörper (2, 24) im Querschnitt U-förmig ausgebildet ist und die Führungsschiene (1, 26) teilweise umgreift.

7. Linearwälzlager nach Anspruch 1, **dadurch gekennzeichnet, dass** die Führungsschiene (14, 29) im Querschnitt U-förmig ausgebildet ist und den Tragkörper (15, 28) teilweise umgreift.

## Claims

1. Linear rolling bearing, with a guide rail (1, 14, 26, 29) and with a carrying body (2, 15, 24, 28) which is supported longitudinally displaceably on the guide rail (1, 14, 26, 29) via carrying rolling bodies (3, 19) of a plurality of endless rolling body orbits, the said carrying body containing a basic body (8, 16, 25, 27) consisting of a moulded material, for example a plastic, of a sintered material or of a die-cast alloy, and also sheet-metal parts (7, 20) which bear against the moulded material and have raceways (5, 22) for the carrying rolling bodies (3, 19), **characterized in that** each sheet-metal part (7, 20) forms a closed orbital path and, within the closed orbital path, has a punched-out orifice (12), by means of which the said sheet-metal part is plugged over a projection (13) of the basic body (8, 16, 25, 27), after which it is laid against the basic body (8, 16, 25, 27) and fastened to the latter.

2. Linear rolling bearing according to Claim 1, **characterized in that** the sheet-metal part (7, 20) is fastened releasably to the basic body (8, 16, 25, 27) by means of screws (9).

3. Linear rolling bearing according to Claim 1, **characterized in that** the sheet-metal part (7, 20) is fastened to the basic body (8, 16, 25, 27) by means of rivets (18).

4. Linear rolling bearing according to Claim 1, **characterized in that** the rolling bodies (3) are balls and, with the components of the rolling bearing, form a ball guide.

5. Linear rolling bearing according to Claim 1, **characterized in that** the rolling bodies (19) are rollers and, with the components of the rolling bearing, form a cross-roller guide.

6. Linear rolling bearing according to Claim 1, **characterized in that** the carrying body (2, 24) is designed with a U-shaped cross section and partially surrounds the guide rail (1, 26).

7. Linear rolling bearing according to Claim 1, **characterized in that** the guide rail (14, 29) is designed with a U-shaped cross section and partially surrounds the carrying body (15, 28).

## Revendications

1. Palier à roulement linéaire avec un rail de guidage (1, 14, 26, 29) et un corps de support (2, 15, 24, 28), qui est appuyé d'une façon déplaçable longitudinalement sur le rail de guidage (1, 14, 26, 29) par des corps de roulement porteurs (3, 19) de plusieurs boucles sans fin de corps de roulement, dans lequel il comprend un corps de base (8, 16, 25, 27) en une matière moulée, par exemple une matière plastique, une matière frittée ou un alliage moulé sous pression, ainsi que des pièces de tôle (7, 20) qui sont appliquées sur la matière moulée et qui présentent des chemins de roulement (5, 22) pour les corps de roulement porteurs (3, 19), **caractérisé en ce que** chaque pièce de tôle (7, 20) forme un chemin continu fermé et présente, à l'intérieur du chemin continu fermé, une ouverture découpée (12), avec laquelle elle est calée sur une saillie (13) du corps de base (8, 16, 25, 27), et elle est ensuite appliquée et fixée sur le corps de base (8, 16, 25, 27).

2. Palier à roulement linéaire selon la revendication 1, **caractérisé en ce que** la pièce de tôle (7, 20) est fixée de façon détachable au corps de base (8, 16, 25, 27) avec des vis (9).

3. Palier à roulement linéaire selon la revendication 1, **caractérisé en ce que** la pièce de tôle (7, 20) est fixée au corps de base (8, 16, 25, 27) avec des rivets (18).

4. Palier à roulement linéaire selon la revendication 1, **caractérisé en ce que** les corps de roulement (3) sont des billes et forment un guidage à billes avec les composants du palier de roulement.

5. Palier de roulement linéaire selon la revendication 1, **caractérisé en ce que** les corps de roulement (19) sont des rouleaux et forment un guidage à rouleaux croisés avec les composants du palier de roulement.

6. Palier de roulement linéaire selon la revendication 1, **caractérisé en ce que** le corps de support (2, 24) a une section transversale en forme de U et entoure partiellement le rail de guidage (1, 26).

7. Palier de roulement linéaire selon la revendication 1, **caractérisé en ce que** le rail de guidage (14, 29) a une section transversale en forme de U et entoure partiellement le corps de support (15, 28).
